# EUROPÄISCHE PATENTANMELDUNG

(11) **EP 2 377 715 A2**
(43) Veröffentlichungstag der Anmeldung: **19.10.2011**
(21) Anmeldenummer: 11075063.5
(22) Anmeldetag: 12.04.2011
(51) Int. Cl.: B60M 1/18

(54) **Streckentrenner für Fahrleitungen elektrischer Bahnen**

(30) Priorität: 14.04.2010 DE 102010015284
(71) Anmelder: Fahrleitungsbau GmbH, D-45329 Essen (DE)
(72) Erfinder: Spiller, Lutz, 45468 Essen (DE)
(74) Vertreter: Hoffmann, Heinz-Dietrich

(57) **Zusammenfassung**

Die Abschnitte der Fahrleitungen elektrischer Bahnen werden durch Streckentrenner verbunden. An diesen entstehen beim Durchfahren Leistungslichtbögen, die schnell zum Erlöschen gebracht werden müssen. Diese Lichtbögen werden üblicherweise durch die Ableitung mittels Funkenhörnern gelöscht. Zusätzlich kann die magnetische Wirkung einer am Streckentrenner angeordneten Spule genutzt werden, um den Lichtbogen an den Funkenhörnern möglichst schnell nach oben abzuleiten. Die bekannten Einrichtungen benötigen zusätzliche aufwändige Vorrichtungen um den Lichtbogen zu löschen.

Der erfindungsgemäße Streckentrenner weist eine "Lichtbogentöscheinrichtung" auf, die aus zwei Permanentmagneten an jedem Kontaktstück besteht, die nahe der Trennstrecke derart angeordnet sind, dass sich die jeweils entgegengesetzten Pole des ersten Permanentmagneten und des zweiten Permanentmagneten gegenüberstehen. Die an der Trennstrecke angeordneten insgesamt vier Permanentmagneten erzeugen ein permanentmagnetisches Feld, welches den Lichtbogen zusätzlich zur thermischen Wirkung von den Kontaktstücken weg bewegt. In einer Ausführung der Erfindung stehen sich die beiden Permanentmagnete (17.1, 18.1), die am ersten Kontaktstück (3) angeordnet sind, mit unterschiedlicher Polarität gegenüber. Dabei weist der Nordpol des Permanentmagneten (17.1) und der Südpol des Permanentmagneten (18.1) jeweils zum Kontaktstück (3) hin. In umgekehrter Weise sind die Permanentmagnete (17.2, 18.2) am zweiten Kontaktstück (4) angeordnet. Hier weist der Südpol des Permanentmagneten (17.2) und der Nordpol des Permanentmagneten (18.2) jeweils zum Kontaktstück (4) hin. Somit stehen sich auch die unterschiedlichen Polaritäten der Permanentmagneten (17.1) und (17.2) sowie der Permanentmagneten (18.1) und (18.2) an der Trennstrecke (6) gegenüber.

## Beschreibung

Die Abschnitte der Fahrleitungen elektrischer Bahnen, die unterschiedlichen Speisebezirken zugeordnet sind, werden mechanisch durch Streckentrenner verbunden, welche die einzelnen Fahrleitungsabschnitte elektrisch voneinander trennen. Bei unterschiedlichem elektrischem Potential zwischen zwei Fahrleitungsabschnitten zieht der Stromabnehmer beim Durchfahren des Streckentrenners einen Leistungslichtbogen über die Isolierstrecke, der Schäden am Streckentrenner verursacht, so dass er schnell zum Erlöschen gebracht werden muss.

Zur Befahrbarkeit sind die Streckentrenner mit Schleifkufen versehen. Besonders schädlich sind Lichtbögen in Gleichstromnetzen, da der Lichtbogen wegen des fehlenden Nulldurchgangs nicht von selbst erlischt. Diese Lichtbögen werden üblicherweise durch die Ableitung mittels Funkenhörnern gelöscht.

Als Einrichtung zum Löschen entstandener Lichtbögen sind Lichtbogenhörner bekannt. An diesen Lichtbogenhörnern steigt der Lichtbogen durch thermischen Auftrieb hoch, wird dabei verlängert, stark gekühlt und entionisiert, so dass er unter günstigen Umständen erlischt. Nachteilig an diesen Anordnungen ist, dass der Lichtbogen nur unter günstigen Verhältnissen (Stromstärke, Potentialunterschied, Witterung und Luftströmung, letztere auch durch die fahrende Lok) zum Erlöschen kommt. Außerdem zeigen Erfahrungen aus Betrieb und Prüffeld, dass der frei in der Luft brennende Lichtbogen eine große Länge erreichen muss, damit die Löschbedingungen erfüllt sind. Damit ist die Gefahr gegeben, dass der räumlich weit ausgedehnte Lichtbogen (bei Fahrdrahtspannungen von 15 kV bis zu 5 m Länge) auf andere Fahrleitungsteile überspringt und Ursache für weitere Störungen in nicht direkt beteiligten Fahrleitungsabschnitten bzw. für Kurzschlüsse wird.

Aus der Literatur sind verschiedene Lösungen bekannt, mit denen derartige Lichtbogen gelöscht werden sollen.

Aus der DE 24 56 610 A1 ist es bekannt, Lichtbogentrennvorrichtungen zu verwenden, bei denen die V-förmig angeordneten Funkenhörner in einer Hilfselektroden enthaltenden Lichtbogenkammer enden, wobei die Hilfselektroden auch als Teilspulen ausgebildet sein können, deren Wicklungsachse in Richtung der Achse der Lichtbogenkammer liegt. Bei dieser Ausführung ist das magnetische Feld der Teilspulen bei der Entstehung des Lichtbogens nicht wirksam, so dass der Lichtbogen nur durch die thermische Wirkung nach oben bewegt wird. Bei der Verwendung von Teilspulen wird der Lichtbogen in einzelne Teillichtbögen aufgeteilt.

Dabei besteht aber die Gefahr, dass der Lichtbogen nicht rasch genug nach oben wandert, so dass der beschleifbare Isolator, der Keramik und Kunststoffteile enthält, beschädigt werden kann.

In der DE 24 37 722 A1 wird ein Lichtbogenunterbrecher beschrieben, der auf an sich bekannten, an den beiden Fahrleitungsenden senkrecht oder schräg nach oben gerichteten Lichtbogenhörnern je ein Löschrohr aus Isoliermaterial aufgesetzt ist, das eine Ausstoßelektrode enthält, die oben aus dem Löschrohr herausragt und die mittels eines Schmelzdrahtes mit dem Lichtbogenhorn verbunden ist. Ein zwischen den beiden Fahrleitungsenden zustande gekommener Lichtbogen steigt aufgrund seiner thermischen und elektromagnetischen Eigenschaften an den Lichtbogenhörnern bis zum oberen Ende der Ausstoßelektrode empor, worauf nach kurzer Zeit der Schmelzdraht schmilzt und an seiner Stelle ein Sekundärlichtbogen entsteht, durch dessen Wärmewirkung sich die Luft in Kammer schlagartig ausdehnt und die Ausstoßelektrode aus dem Löschrohr herausschleudert.

Diese Lösung ist relativ aufwändig und muss nach jeder Löschung eines Lichtbogens erneuert werden. Zudem birgt die herausgeschleuderte Ausstoßelektrode zusätzliche Gefahren.

Aus der US 2 414 200 A ist ein Streckentrenner bekannt, der ebenfalls über Funkenhörner verfügt. Zur Lichtbogenlöschung ist bei diesem Streckentrenner eine Blasspule vorgesehen, die in der Nähe eines der Funkenhörner angeordnet ist.

In der DE 10 2006 035 844 wird ein Schütz für Gleichstrom- und Wechselstrombetrieb beschrieben, der eine Kontaktstelle mit einem Festkontakt und einem beweglichen Kontakt aufweist. In der Nähe zu der Kontaktstelle ist ein Permanentmagnet zur Erzeugung eines permanentmagnetischen Blasfelds angeordnet. Weiterhin ist weist die Kontaktstelle eine Spule zur Erzeugung eines elektromagnetischen Blasfelds auf, das den beim Öffnen der Kontaktstelle entstehenden Lichtbogen nach oben in eine Löscheinrichtung bewegt.

Es sind weitere Lösungen bekannt, bei denen mit zusätzlichen Schalteinrichtungen der Lichtbogen gelöscht wird.

So wird in der DE 28 41 434 C2 eine Lösung offenbart, bei der die Trennstelle bei Auftreten eines Lichtbogens durch einen mechanischen Schalter überbrückt wird, so dass der Lichtbogen erlischt. Dabei wird beim Durchfahren des Streckentrenners mit dem Stromabnehmer durch den Schalter ein Kondensator an ein Bezugspotential und an dasjenige Ende des Abschnittes des Fahrdrahtes geschaltet, den der Stromabnehmer gerade verlassen hat, wobei der Kondensator derart bemessen ist, dass die in der Netz- und Fahrzeuginduktivität gespeicherte magnetische Energie von ihm aufgenommen werden kann. Auf diese Weise wird ein Lichtbogen vor oder unmittelbar nach seinem Entstehen unterdrückt, da der Strom, der über die Trennstelle des Streckentrenners fließen möchte, zum Kondensator umgeleitet wird und somit die elektrische Ionisation der Trennstelle unterbindet.

In der DE 25 48 986 A1 verfügt der Streckentrenner über eine Hilfselektrode, welche über eine elektromagnetische Betätigungseinrichtung mit dem zweiten Abschnitt des elektrischen Fahrdrahtes verbunden ist, so dass der Fußpunkt des Lichtbogens auf dem zweiten Abschnitt von diesem auf die Hilfselektrode kommutiert und ein Schalter durch den Lichtbogenstrom elektromagnetisch betätigbar ist.

Bei der DE 103 19 126 B4 wird ein Streckentrenner beschrieben, dessen ankommende und abgehende Fahrleitung über einen Schalter miteinander verbunden sind, der über eine Steuereinheit zum Schließen des Schalters bei herannahendem Fahrzeug und zum Öffnen des Schalters bei sich entfernendem Fahrzeug verfügt, die eingangsseitig mit einem Positionsmelder verbunden ist, der die Position des Fahrzeugs erkennt, und die ausgangsseitig mit dem Schalter verbunden ist. Der Schalter wird unmittelbar vom Fahrzeug aus geschaltet.

Hier muss der Streckentrenner über einen Schalter und zusätzliche Positionsmelder verfügen.

In der EP 0 592 819 B1 wird ein Streckentrenner mit Isolierkufen beschrieben, der über je einer Anschlußvorrichtung mit einem Funkenhorn für das jeweilige Fahrdrahtende verfügt, die über Isolierkufen derart miteinander verbunden sind, dass sich die Lichtbogenhörner an der Trennstelle isoliert gegenüberstehen. An der Trennstelle sind zwei Leitkufen angeordnet, die diese überbrückenden, wobei die Leitkufen jeweils mit einer der Isolierkufen mechanisch verbunden und beide mit einem der Lichtbogenhörner elektrisch leitend verbunden sind. Jede der beiden Leitkufen eines Anschlußstücks geht in das Funkenhorn über und wird über einen rückgebogenen Lichtbogenteil rückgeführt und mit einem Abfangstück verbunden. Diese Anordnung der Anschiußstücke wird als nächstliegender Stand der Technik für die vorliegende Anmeldung herangezogen.

In der Lösung gemäß der DE 28 41 350 C2 wird die magnetische Wirkung einer am Streckentrenner angeordneten Spule genutzt, um den Lichtbogen an den Funkenhörnern möglichst schnell nach oben abzuleiten. Dabei ist die Spule als mechanisch tragendes Verbindungsstück zwischen Kufe und Funkenhorn ausgebildet, wobei die Verbindungsstelle zwischen Spule und Funkenhorn stark gekrümmt ist und an der engsten Stelle von einander zugeordneten Funkenhörnern liegt. Dadurch wird erreicht, dass sich die Lichtbogenfußpunkte an der stark gekrümmten Verbindungsstelle zwischen Spule und Funkenhorn ausbilden und der entstehende Lichtbogen unverzüglich nach oben getrieben und dadurch schneller zum Erlöschen gebracht werden kann.

Alle vorgenannten Einrichtungen benötigen zusätzliche aufwändige Vorrichtungen um den Lichtbogen zu löschen.

Die Aufgabe der Erfindung besteht darin, einen Streckentrenner anzugeben, der einfach und robust gebaut ist, bei dem der entstehende Lichtbogen an der Trennstrecke schnell verlängert und von dieser weggelenkt wird, wodurch er auch schnell erlischt.

Die Aufgabe wird erfindungsgemäß durch einen Streckentrenner mit den Merkmalen des Anspruchs 1 gelöst. Der Streckentrenner ist als kompaktes Bauteil ausgeführt, das zwischen den Fahrdrähten der beiden Streckenabschnitte angeordnet wird. Der Streckentrenner weist zwei über die gesamte Länge reichende elektrisch isolierende Schleifkufen auf, die an jedem Ende mit einem Anschlussstück verbunden sind, die mit den jeweiligen Fahrdrahtenden der beiden Streckenabschnitte verbunden sind. Zwischen den Schleifkufen sind zwei elektrisch leitende Kontaktstücke angeordnet. Jedes Kontaktstück ist mit einem Anschlussstück des Streckentrenners und damit mit jeweils einem Streckenabschnitt elektrisch verbunden, wobei zwischen den beiden Kontaktstück ein Zwischenraum, die Trennstrecke besteht. Jedes Kontaktstück ist dabei in drei Teilabschnitte unterteilt. Der erste Teilabschnitt bildet die parallel zum Fahrdraht und zu den Schleifkufen angeordneten Gleitkufen. Die beiden Gleitkufen sind am Beginn der Trennstrecke jeweils in einem Winkel α = 30° ≤ 60° abgewinkelt. Der zweite abgewinkelte Teilabschnitt jedes Kontaktstücks wirkt als Funkenhorn. Die Länge des jeweiligen Funkenhorns beträgt a= 100 mm ≤ 150 mm. An dieser Stelle, die dem Ende des Funkenhorns entspricht, weisen die Kontaktstücke eine weitere Abwinkelung auf, deren Winkel β = 180° - α beträgt. Die Kontaktstücke werden dann im dritten Teilabschnitt parallel zu den Gleitkufen als Halterung jeweils zurück bis zum Anschlussstück geführt, mit dem sie wiederum fest verbunden sind. Dadurch weist der Streckentrenner, der aus zwei gleich aufgebauten und seitenverkehrt angeordneten Kontaktstücken besteht, eine hohe mechanische Stabilität auf.

Die eigentliche "Lichtbogentöscheinrichtung" besteht aus zwei Permanentmagneten an jedem Kontaktstück, die nahe der Trennstrecke derart angeordnet sind, dass sich die jeweils entgegengesetzten Pole des ersten Permanentmagneten und des zweiten Permanentmagneten gegenüberstehen und in der Trennstrecke ein permanentmagnetisches Feld erzeugt wird, welches den Lichtbogen von den Kontaktstücken weg bewegt.

In einer ersten Ausführung ist jeweils ein erster Permanentmagnet parallel zu den Gleitkufen am Beginn der Trennstrecke und jeweils ein zweiter Permanentmagnet parallel zu den Funkenhörnern derart angeordnet, dass sich die jeweils entgegengesetzten Pole des ersten Permanentmagneten und des zweiten Permanentmagneten unter einem Winkel α gegenüberstehen. Dabei sind die Permanentmagnete in den beiden Kontaktstücken derart angeordnet, dass sich die gleichen Pole des ersten Permanentmagneten im ersten Kontaktstück sowie des ersten Permanentmagneten im zweiten Kontaktstück am Beginn und Ende der Trennstrecke gegenüberstehen. Bei dieser Ausführung wird durch die insgesamt vier Permanentmagneten an der Trennstrecke, am Fußpunkt eines entstehenden Lichtbogens, ein gekoppeltes permanentmagnetisches Feld erzeugt, welches bewirkt, dass der Lichtbogen entlang der Funkenhörner schnell nach oben getrieben und dadurch verlängert wird, so dass er schneller zum Erlöschen gebracht werden kann.

In einer weiteren Ausführung des erfindungsgemäßen Streckentrenners ist jeweils am Beginn der Trennstrecke ein Permanentmagnet rechts und ein weiterer Permanentmagnet links zur ersten Gleitkufe angeordnet, wobei sich die jeweils entgegengesetzten Pole der beiden Permanentmagnete gegenüberstehen. Analog sind parallel zu der zweiten Gleitkufe ebenfalls ein Permanentmagnet rechts und ein zweiter Permanentmagnet links zur Gleitkufe angeordnet. Auch hier stehen sich die jeweils entgegengesetzten Pole der beiden Permanentmagneten gegenüber. Die jeweils ersten und zweiten Permanentmagnete sind derart an den beiden Gleitkufen angeordnet, dass sich jeweils die entgegengesetzten Pole der Permanentmagnete an der Trennstrecke gegenüberstehen. Bei dieser Ausführung wird der entstehende Lichtbogen thermisch nach oben und unter Wirkung des zusätzlichen permanentmagnetischen Feldes an den Funkenhörnern nach außen gelenkt, wodurch eine schnelle Verlängerung des Lichtbogens bewirkt wird.

Es hat sich als vorteilhaft erwiesen, wenn die jeweils parallel zu den Gleitkufen angeordneten Permanentmagneten in die Trennstrecke hineinragen.

Die Feldstärke der verwendeten Permanentmagnete beträgt zwischen 0,5 Tesla und 2 Tesla.

Damit möglichst große Feldstärken bei geringem Volumen erreicht werden, ist es vorteilhaft, die Permanentmagnete als Registeranordnung, bestehend aus jeweils mehreren Einzelmagneten, auszuführen, wobei die Einzelmagnete mit gleicher Polarität parallel zueinander angeordnet werden.

Die Vorteile dieses Streckentrenners bestehen insbesondere darin, dass er robust und einfach aufgebaut ist. Durch die Verwendung von zwei gleichen Kontaktstücken und ebenfalls gleichen Anschlussstücken ist eine preiswerte Herstellung möglich. Auch die Verwendung von vier Permanentmagneten gewährleistet einen unkomplizierten Aufbau und hohe Wartungsfreiheit des Streckentrenners. Das gekoppelte Magnetfeld am Fußpunkt des Lichtbogens bewirkt, dass dieser schnell und zuverlässig von den Kontaktstücken weg getrieben und verlängert wird, so dass er schnell verlischt.

Der erfindungsgemäße Streckentrenner wird nachfolgend an Hand eines Ausführungsbeispiels und einer Zeichnung näher erläutert.

Dabei zeigt die zugehörige Zeichnung:
Fig. 1: Seitenansicht einer ersten Ausführung des Streckentrenners
Fig. 2: Seitenansicht einer zweiten Ausführung des Streckentrenners
Fig. 3: Draufsicht auf die zweite Ausführung des Streckentrenners

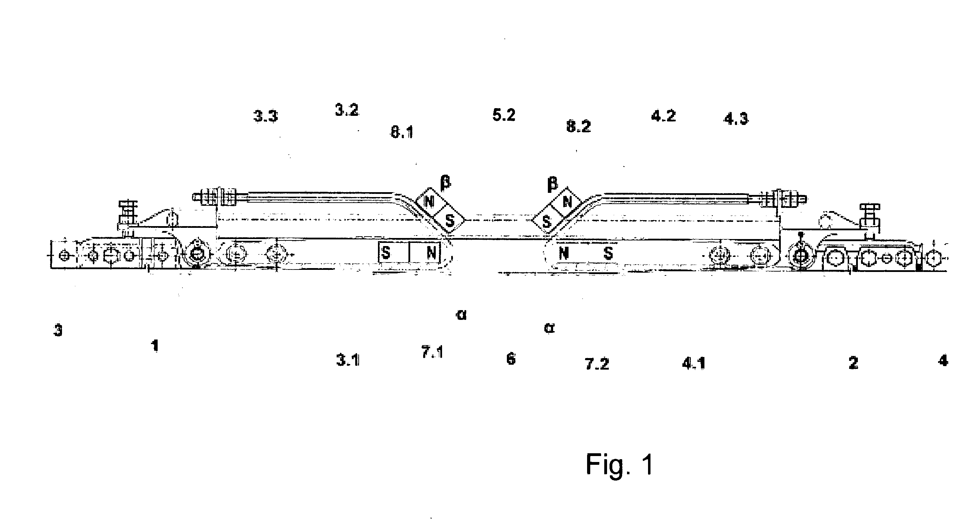

Die Fig. 1 zeigt eine Seitenansicht einer ersten Ausführung des erfindungsgemäßen Streckentrenners.

Zur Befahrbarkeit in beiden Richtungen durch den Stromabnehmer des Fahrzeuges ist der Streckentrenner mit paarweise angeordneten Schleifkufen 5.1, 5.2 versehen, welche den Stromabnehmer sicher am bzw. unter dem Streckentrenner vorbeiführen. Zur besseren Darstellung des Streckentrenners ist die vordere Schleifkufe **5.1** nicht eingezeichnet.

Der erfindungsgemäße Streckentrenner ist als kompaktes Bauteil ausgeführt, das an jedem Ende ein Anschlussstück **1, 2** aufweist, wobei die beiden Anschlussstücke **1, 2** durch die beiden isolierenden und befahrbaren Schleifkufen **5** fest miteinander verbunden sind. Das Anschlussstück **1** ist mit dem Fahrdraht eines ersten Streckenabschnitts verbunden, während das Anschlussstück **2** mit dem Fahrdraht eines zweiten Streckenabschnitts verbunden ist.

Zwischen den Schleifkufen **5.1, 5.2** sind zwei elektrisch leitende Kontaktstücke 3, **4** angeordnet. Die Kontaktstücke **3, 4** sind jeweils gleich aufgebaut und werden spiegelbildlich im Streckentrenner angeordnet. Jedes Kontaktstück **3, 4** ist mit einem Anschlussstück **1, 2** des Streckentrenners und damit mit jeweils einem Streckenabschnitt elektrisch verbunden. Die beiden Kontaktstücken **3, 4** weisen zueinander einen Zwischenraum, die Trennstrecke **6** auf. Jedes Kontaktstück **3, 4** ist dabei in drei Teilabschnitte unterteilt. Der erste Teilabschnitt jedes Kontaktstücks **3, 4** ist parallel zum Fahrdraht und zu den Schleifkufen **5.1, 5.2** angeordnet und bildet die Gleitkufen **3.1, 4.1.** Diese beiden Gleitkufen **3.1, 4.1** sind jeweils am Beginn der Trennstrecke **6**, wo sich die beiden Kontaktstücke **3, 4** mit einem definierten Abstand gegenüber stehen, jeweils in einem Winkel α = 30 ≤ 60° nach oben abgewinkelt. Im gewählten Beispiel beträgt dieser Winkel ca. 45°. Die abgewinkelten Teilabschnitte der Kontaktstücke **3, 4** bilden die Funkenhörner **3.2, 4.2**. Die Länge des jeweiligen Funkenhorns **3.2, 4.2** beträgt im dargestellten Beispiel a= ca. 120 mm. Am Ende der Funkenhörner **3.2, 4.2**, die der höchsten Stelle der Kontaktstücke **3, 4** entspricht, weisen die Kontaktstücke **3, 4** jeweils eine weitere Abwinkelung auf, deren Winkel hier β = ca. 135° beträgt. Die Kontaktstücke **3, 4** werden von dieser Stelle an parallel zu den Gleitkufen **3.1, 4.1**, im dritten Teilabschnitt als Halterung **3.3, 3.4** jeweils bis zum jeweiligen Anschlussstück **1, 2** zurückgeführt, mit dem sie wiederum fest verbunden sind. Dadurch erhält der Streckentrenner eine hohe mechanische Stabilität.

Damit der an der Trennstrecke, dem kürzesten Abstand zwischen den beiden Kontaktstücken **3, 4** entstehende Lichtbogen nicht nur durch die thermische Wirkung an den Funkenhörnern nach oben bewegt wird, soll diese Bewegung durch ein zusätzliches Magnetfeld verstärkt werden. Dazu sind an jedem Kontaktstück **3, 4** jeweils zwei Permanentmagneten **7.1, 8.1** bzw. **7.2, 8.2** angeordnet. Jeweils ein erster Permanentmagnet **7.1, 7.2** ist parallel zu den Gleitkufen **3.1, 4.1** an der unteren Abwinkelung der Kontaktstücke **3, 4,** am Beginn bzw. am Ende der Trennstrecke **6** angeordnet. Dabei sind die jeweils gleichen Pole, im dargestellten Beispiel die Nordpole der Permanentmagnete **7.1, 7.2** möglichst nahe an der Trennstrecke **6** angeordnet. Jeweils ein zweiter Permanentmagnet **8.1, 8.2** ist parallel zu dem jeweiligen Funkenhorn **3.2, 4.2** angeordnet. Dabei sind die jeweils zweiten Permanentmagnet **8.1, 8.2** derart angeordnet, dass sich die entgegengesetzten Pole des ersten Permanentmagneten und des zweiten Permanentmagneten unter dem Winkel α gegenüberstehen. Im dargestellten Beispiel bedeutet das, dass die Südpole der zweiten Permanentmagnet **8.1, 8.2** jeweils nach unten angeordnet sind. Durch diese Anordnung der insgesamt vier Permanentmagneten **7.1, 7.2, 8.1, 8.2** wird in der Trennstrecke **6,** an der Stelle an der sich die beiden Kontaktstücke **3, 4** am nächsten kommen, am Fußpunkt eines entstehenden Lichtbogens, ein gekoppeltes Magnetfeld erzeugt, welches bewirkt, dass der Lichtbogen schnell nach oben getrieben und dadurch verlängert wird, so dass er schneller zum Erlöschen gebracht werden kann. Im gewählten Beispiel weisen die beiden ersten Permanentmagnete **7.1, 7.2** eine Feldstärke von **1,38** Tesla auf. Die jeweils zweiten Permanentmagnete **8.1, 8.2** weisen ebenfalls eine Feldstärke von **1,38** Tesla auf.

Da die beiden Kontaktstücke **3, 4,** mit den daran angeordneten Permanentmagneten **7.1, 7.2, 8.1, 8.2**, und die beiden Anschlussstücke **1, 2** gleich sind, können diese Teile einfach hergestellt und montiert werden. Diese konfektionierten Bauteile werden dann spiegelbildlich mit den beiden Schleifkufen **5** verbunden und zum fertigen Streckentrenner vervollständigt.

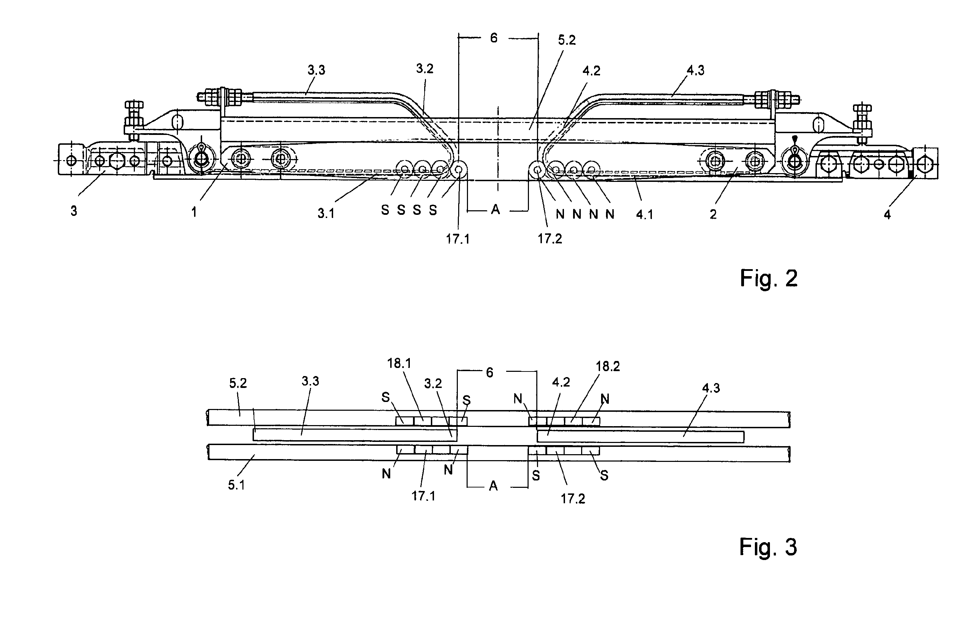

Die Fig. 2 zeigt eine Seitenansicht einer zweiten Ausführung des erfindungsgemäßen Streckentrenners. Auch hier ist zur besseren Darstellung des Streckentrenners ist die vordere Schleifkufe **5.1** nicht eingezeichnet. Der Streckentrenner ist grundsätzlich analog zur ersten Ausführung aufgebaut. Unterschiede bestehen in der eigentlichen "Lichtbogentöscheinrichtung", die auch hier aus vier Permanentmagneten **17.1, 18.1, 17.2, 18.2** besteht, die an den beiden Gleitkufen **3.1, 4.1** in unmittelbarer Nähe zur Trennstrecke **6** angeordnet sind. Dabei ist an der rechten Seite der ersten Gleitkufe **3.1** ein erster Permanentmagnet **17.1** angeordnet, während ein zweiter Permanentmagnet **18.1** an der linken Seite der ersten Gleitkufe **3.1** angeordnet ist. Dabei stehen sich die entgegengesetzten Pole der beiden Permanentmagnete **17.1, 18.1** gegenüber. Analog dazu sind parallel zu der zweiten Gleitkufe **4.1** ebenfalls ein erster Permanentmagnet **17.2** rechts und ein zweiter Permanentmagnet **18.2** links zur Gleitkufe **4.1** derart angeordnet, dass sich die jeweils entgegengesetzten Pole der beiden Permanentmagneten **17.2, 18.2** gegenüberstehen. Dabei sind die jeweils ersten Permanentmagnete **17.1, 18.1** und die jeweils zweiten Permanentmagnete **17.2, 18.2** derart angeordnet, dass sich auch die unterschiedlichen Polaritäten der Permanentmagneten an der Trennstrecke **6** gegenüberstehen.

Die vier Permanentmagnete **17.1, 18.1,17.2, 18.2** bestehen bei der beschriebenen Ausführung jeweils aus einer Registeranordnung, die jeweils aus mehreren einzelnen zylinderförmigen Permanentmagneten zusammengesetzt sind, wobei die Einzelmagneten einer Registeranordnung jeweils gleich gepolt sind.

Es hat sich als vorteilhaft erwiesen, wenn die jeweils parallel zu den Gleitkufen **3.1, 4.1** angeordneten Permanentmagneten **17.1, 18.1, 17.2, 18.2** in die Trennstrecke **6** hineinragen. Beim gewählten Beispiel hat die Trennstrecke **6** eine Länge von ca. 100 mm und der Abstand **A** zwischen den Permanentmagneten **17.1** und **17.2** bzw. **18.1** und **18.2** beträgt ca. 50 mm.

Damit die Permanentmagnete möglichst dicht an den Gleitkufen angebracht werden können, wurden diese im gewählten Beispiel in die parallel zu den beiden Gleitkufen **3.1, 4.1** angeordneten durchgehenden Schleifkufen **5.1, 5.2** eingelassen. Dazu wurden aus den Schleifkufen **5.1, 5.2** entsprechende Nuten herausgefräst.

Bei dieser Ausführung wird der entstehende Lichtbogen thermisch an den Funkenhörnern nach oben und unter Wirkung des zusätzlichen permanentmagnetischen Feldes an der Trennstrecke nach außen gelenkt, wodurch eine schnelle Verlängerung des Lichtbogens bewirkt wird, was zu einer schnellen Löschung führt.

Die Fig. 3 zeigt eine Draufsicht auf die Löscheinrichtung in der zweiten Ausführung des erfindungsgemäßen Streckentrenners. Außen liegen die beiden isolierenden Schleifkufen **5.1, 5.2.** In der Draufsicht sind zwischen den Schleifkufen die Funkenhörner **3.2, 4.2** sowie die rückgeführten Halterungen **3.3, 3.4** der beiden Kontaktstücke **3, 4** dargestellt. Zur besseren Darstellung der Anordnung der Permanentmagnete **17.1, 18.1, 17.2, 18.2** sind die beiden Schleifkufen **5.1, 5.2** im Schnitt gezeichnet. So ist erkennbar, dass die Permanentmagnete **17.1, 18.1, 17.2, 18.2** jeweils in einer Ausnehmung in den Schleifkufen **5.1, 5.2** angeordnet sind. Jeder Permanentmagnet besteht im Beispiel aus vier Einzelmagneten, die dicht nebeneinander angeordnet sind, wobei alle Einzelmagnete in der jeweiligen Registeranordnung mit gleicher Polarität angeordnet sind. Die beiden Permanentmagnete **17.1, 18.1,** die am ersten Kontaktstück **3** angeordnet sind, stehen sich mit unterschiedlicher Polarität gegenüber. Dabei weist der Nordpol des Permanentmagneten **17.1** und der Südpol des Permanentmagneten **18.1** jeweils zum Kontaktstück **3** hin. In umgekehrter Weise sind die Permanentmagnete **17.2, 18.2,** am zweiten Kontaktstück **4** angeordnet. Hier weist der Südpol des Permanentmagneten **17.2** und der Nordpol des Permanentmagneten **18.2** jeweils zum Kontaktstück **4** hin. Somit stehen sich auch die unterschiedlichen Polaritäten der Permanentmagneten **17.1** und **17.2** sowie der Permanentmagneten **18.1** und **18.2** an der Trennstrecke 6 gegenüber.

### Aufstellung der Bezugszeichen:

1 Anschlussstück zum ersten Streckenabschnitt
2 Anschlussstück zum zweiten Streckenabschnitt
3 Kontaktstück zum ersten Streckenabschnitt
3.1 Gleitkufe des ersten Kontaktstücks
3.2 Funkenhorn des ersten Kontaktstücks
3.3 Halterung des ersten Kontaktstücks
4 Kontaktstück zum zweiten Streckenabschnitt
4.1 Gleitkufe des zweiten Kontaktstücks
4.2 Funkenhorn des zweiten Kontaktstücks
4.3 Halterung des zweiten Kontaktstücks
5.1, 5.2 isolierende Schleifkufen
6 Trennstrecke
7.1, 17.1 erster Permanentmagnet an der ersten Gleitkufe
7.2, 17.2 erster Permanentmagnet an der zweiten Gleitkufe
8.1 zweiter Permanentmagnet am Funkenhorn des ersten Kontaktstücks
8.2 zweiter Permanentmagnet am Funkenhorn des zweiten Kontaktstücks
18.1 zweiter Permanentmagnet an der ersten Gleitkufe
18.2 zweiter Permanentmagnet an der zweiten Gleitkufe
α Winkel zwischen Gleitkufe und Funkenhorn
β Winkel zwischen Funkenhorn und Halterung
a Länge des Funkenhorns
A Abstand der Permanentmagnete bei der zweiten Ausführung
N Nordpole der Permanentmagnete
S Südpole der Permanentmagnete

## Patentansprüche

1. Streckentrenner, insbesondere für Fahrleitungen elektrischer Bahnen, bei dem zwei Fahrleitungsabschnitte mit jeweils einem Anschlussstück verbunden sind, die mittels paarweise angeordneten von einem Stromabnehmer beschleifbaren elektrisch isolierenden Schleifkufen miteinander verbunden sind, bei dem zwischen den Schleifkufen zwei Kontaktstücke, die jeweils drei Teilabschnitte aufweisen, deren erste Teilabschnitte in Form von Gleitkufen ausgebildet sind, die parallel zu den Schleifkufen angeordnet sind, deren zweite Teilabschnitte, die um einen Winkel α gegenüber den Gleitkufen abgewinkelt sind, jeweils ein Funkenhorn bilden, und deren dritte Teilabschnitte parallel zu den Schleifkufen bis zu den Anschlussstücken zurückgeführt und mit diesen verbunden werden, mit einem Abstand, dem Trennbereich, zueinander angeordnet sind und der Lichtbogen thermisch und unter Verwendung eines zusätzlichen magnetischen Feldes von den Funkenhörnern weg bewegt wird,
**dadurch gekennzeichnet, dass**
an jedem Kontaktstück (3, 4) nahe der Trennstrecke (6) zwei Permanentmagneten (7.1, 8.1, 17.1, 18.1 bzw. 7.2, 8.2, 17.2, 18.2) derart angeordnet sind, dass sich die jeweils entgegengesetzten Pole der Permanentmagneten (7.1, 8.1, 17.1, 18.1) an der ersten Gleitkufe (3.1) und die jeweils entgegengesetzten Pole der Permanentmagneten (7.2, 8.2, 17.2, 18.2) an der zweiten Gleitkufe (4.1) gegenüberstehen und ein permanentmagnetisches Feld in der Trennstrecke (6) zwischen den Kontaktstücken (3, 4) erzeugt wird.

2. Streckentrenner nach Anspruch 1, **dadurch gekennzeichnet, dass** jeweils ein erster Permanentmagnet (7.1, 8.1) parallel zu den Gleitkufen (3.1, 4.1) am Beginn der Trennstrecke (6) und jeweils ein zweiter Permanentmagnet (8.1, 8.2) parallel zu den Funkenhörnern (3.2, 4.2) derart angeordnet sind, dass sich die jeweils entgegengesetzten Pole des ersten Permanentmagneten (7.1, 8.1) und des zweiten Permanentmagneten (8.1, 8.2) unter einem Winkel α gegenüberstehen wobei die Permanentmagnete (7.1, 7.2, 8.1, 8.2) in den beiden Kontaktstücken (3, 4) derart angeordnet sind, dass sich die gleichen Pole des ersten Permanentmagneten (7.1) im ersten Kontaktstück (3) sowie des ersten Permanentmagneten (7.2) im zweiten Kontaktstück (4) am Beginn und Ende der Trennstrecke (6) gegenüberstehen.

3. Streckentrenner nach Anspruch 1, **dadurch gekennzeichnet, dass** jeweils am Beginn der Trennstrecke (6) jeweils ein Permanentmagnet (17.1, 18.1) rechts und links und parallel zu der Gleitkufe (3.1) derart angeordnet ist, dass sich die jeweils entgegengesetzten Pole der beiden Permanentmagneten (17.1, 18.1) gegenüberstehen und parallel zu der Gleitkufe (4.1) ebenfalls jeweils ein Permanentmagnet (17.2, 18.2) rechts und links und parallel zu der Gleitkufe (4.1) derart angeordnet ist, dass sich die jeweils entgegengesetzten Pole der beiden Permanentmagneten (17.2, 18.2) gegenüberstehen und sich die jeweils entgegengesetzten Pole der Permanentmagnete (17.1, 18.1) an der Gleitkufe (3.1) und der Permanentmagnete (17.2, 18.2) an der Gleitkufe (4.1) an der Trennstrecke (6) gegenüberstehen.

4. Streckentrenner nach Anspruch 3, **dadurch gekennzeichnet, dass** die jeweils parallel zu den Gleitkufen (3.1, 4.1) angeordneten Permanentmagneten (17.1, 18.1, 17.2, 18.2) in die Trennstrecke (6) hineinragen.

5. Streckentrenner nach Anspruch 1, **dadurch gekennzeichnet, dass** die Permanentmagnete (7.1, 7.2, 8.1, 8.2, 17.1, 18.1, 17.2, 18.2) jeweils aus einer Registeranordnung zusammengesetzt sind, die jeweils aus mehreren einzelnen Permanentmagneten bestehen, die innerhalb einer Registeranordnung jeweils gleich gepolt sind.

6. Streckentrenner nach Anspruch 1, **dadurch gekennzeichnet, dass** die Winkel α zwischen den Gleitkufen (3.1, 4.1) und den Funkenhörnern (3.2, 4.2) α = 30° ≤ 60° betragen und die Winkel β zwischen den Funkenhörnern (3.2, 4.2) und den Halterungen (3.3, 4.3) β = 180° - α betragen.

7. Streckentrenner nach Anspruch 1, **dadurch gekennzeichnet, dass** die Länge der Funkenhörner a= 120 mm beträgt.

8. Streckentrenner nach Anspruch 1, **dadurch gekennzeichnet, dass** die Feldstärke der beiden ersten Permanentmagnete (7.1, 7.2, 17.1, 18.1) zwischen 0,5 Tesla und 2 Tesla beträgt.

9. Streckentrenner nach Anspruch 1, **dadurch gekennzeichnet, dass** die Feldstärke der beiden zweiten Permanentmagnete (8.1, 8.2, 17.2, 18.2) zwischen 0,5 Tesla und 2 Tesla beträgt.
